# EUROPEAN PATENT APPLICATION

(11) **EP 1 097 969 A1**
(43) Date of publication of application: **09.05.2001**
(21) Application number: 99904885.3
(22) Date of filing: 16.02.1999
(51) Int. Cl.: C08L 95/00, C08L 53/02, C08K 3/00

(54) **MODIFIER FOR IMPROVING THE BEHAVIOR OF BITUMINOUS MIXTURES USED IN ROAD PAVING**

(71) Applicant: Dynasol Elastomeros, S.A., 28046 Madrid (ES); REPSOL PETROLEO S.A., E-28046 Madrid (ES); Esha Holding B.V., 9704 CH Groningen (NL)
(72) Inventor: PAEZ DUENAS, Antonio, E-28224 Pozuelo de Alarcon (ES); TERCERO LOPEZ, José Maria, E-28028 Madrid (ES); MONTERO CARNERERO, Enrique, E-39007 Santander (ES); HOPPEN, Hendrikus, Johannes, NL-9728 WB Groningen (NL); WORTELBOER, Johannes, Petrus, NL-9465 TB Anderen (NL)
(74) Representative: Davila Baz, Angel
(86) International application number: ES9900039
(87) International publication number: WO0049091

(57) **Abstract**

A modifier to improve the performance of bituminous mixtures used in the road paving, whose modifier is easily dispersible at any ratio in the bituminous mixtures, and leads to a mixture with improved properties as compared with traditional bituminous mixtures.

The modifier comprises a concentrated dispersion of a polymer in a heavy oil fraction coming from petroleum refining operations, in the presence of fillers like those used in the manufacture of bituminous mixtures for roads. Besides these three main components (polymer, heavy oil fraction and fillers), the modifier according to this invention may contain, if desired, other components such as adhesiveness promoters. These components are mixed in equipment such as those used to compound rubber.

## Description

### Field of the Invention

This invention is related to a modifier to improve the performance of bituminous mixtures used in road paving.

### Description of the Prior Art

As it is known, the need for bituminous mixtures for roads with improved performance as compared with conventional mixtures, has resulted in the addition of different substances to said mixtures.

The use of bituminous mixtures to which fibres are added is consequently well known in the state of the art on the paving of roads. These fibres are usually asbestos, cellulose, acrylics, etc. **U.S. Patent 3,864,157** mentions the use of asbestos in road pavements. An example of the use of plastic fibres is found in **"Proceedings of the Second International Rilem Conference"** published by **E&FN Spon (1993)**. These practices have a double purpose:
- A first objective is to achieve better cohesiveness in the mixture, resulting in a mixture having a higher void content without disintigration thereof;
- The other objective is to be able to manufacture mixtures having very low thickness and high bitumen content, to prevent fast ageing as well as fast fatigue cracking.

One of the main disadvantages of this practice is a considerable reduction in the yield of the bituminous mixture manufacturing plant, since a very low addition of the fibre is necessary to prevent agglomeration.

Another disadvantage caused by the addition of fibres is that the latter is a heterogeneous product with respect to the bitumen, not forming a compatible mastic with it, thus having to add a large amount of fibre for it to be effective. Moreover, and in many cases, the bitumen does not wet the fibres sufficiently, such that adhesiveness problems have been detected.

Other alternative is to use different low melting point polymers that homogenise with the bitumen during manufacturing of the mixture. An example of this technique may be found in **European Patent Application 81 40 0820**. However, and as in the case of fibres, this practice requires large amounts of polymer and long mixing times. If the mixing times are reduced, very heterogeneous products are obtained, which are difficult to compact.

The third alternative is to use polymer modified bitumen. This widely used alternative has the disadvantage of requiring an additional storage tank in the Asphalt Manufacturing Plant, which has to be maintained at a high temperature. It is necessary to use large amounts of modified bitumen for this practice to be profitable. It is additionally necessary to use very compatible systems to prevent phase separation during bitumen storage.

In like manner, the manufacture of polymer modified bitumen requires complicated and expensive installations, which is an additional disadvantage.

It would consequently be convenient for such bituminous mixtures to have a modifier which would satisfactorily solve the prior stated disadvantages of the state of the art.

### Object of the Invention

The object of this invention is to provide a modifier which easily disperses in the bituminous mixture in any ratio, and which permits the latter to have improved properties as compared with traditional bituminous mixtures.

### Advantages of the Invention

One of the advantages of the modifier according to this invention is that it is available, and stored, as pellets. Another advantage of the modifier according to this invention is that it disperses easily in the bituminous mixture, preventing long dispersion times and the need to use an additional heated tank. A further advantage of the modifier according to this invention is that it does not agglomerate in the bituminous mixture during its production, preventing long production times.

Therefore , the modifier according to this invention has the following advantages:
- being in the form of pellets and easily dispersed in bituminous mixtures, it may be added in any ratio in accordance with the requirements of the paving to be done at each application point;
- being easily dispersed, no large heated storage tanks are required, with these being necessary when other modifiers are used, resulting in a much cheaper process;
- the use of this product represents an improvement in properties as compared with other bitumen mixtures.

### Description of the Invention

In a first aspect, the invention provides a modifier consisting of a concentrated dispersion of a polymer in a heavy oil fraction coming from petroleum refining operations, in the presence of fillers like those used in the manufacture of bituminous mixtures for roads. Besides these three main components (polymer, heavy oil fraction and fillers), the modifier according to this invention may contain, if desired, other additives such as adhesiveness promoters. These components are mixed in equipment such as those used to compound rubber.

More specifically, and according to said first aspect, the invention provides a modifier to improve the performance of the bituminous mixtures used in road paving, characterised in that it comprises:
- 10 to 75% by weight of a polymer selected from the group consisting of natural rubber, ethylene-vinyl acetate copolymers, ethylene and propylene copolymers, synthetic rubbers of the type (A-B)ₙ or (A-B)ₙ - A wherein n is equal to or greater than 1, A corresponds to polystyrene chains and B corresponds to polybutadiene or polyisoprene chains, these rubbers having a linear or radial architecture, of a block, partial block or random block structure, hydrogenated or not, and mixtures of said polymers in any ratio;
- 10 to 75% by weight of a heavy oil fraction derived from petroleum refining operations and selected from the group consisting of bitumen coming from vacuum distilling units, or from deasphalting units, or from visbreaking units; medium neutral and heavy neutral coming from the lubricant vacuum unit; bright stock coming from the deasphalting unit; heavy and bright stock extracts coming from the furfural unit; and mixtures of said fractions in any ratio.
- 1 to 75% of a mineral filler selected from the group consisting of Portland cement of any grade, limestone, industrial calcium carbonate, basalt, quartzite, fly ash, talc, and mixtures of said fillers in any ratio;
- optionally, additives promoting adhesiveness.

Regarding the polymeric component of the modifier according to this invention, the same is preferably used in amounts between 20 and 70% by weight and, as already indicated, this component may consist of mixtures of said polymers.

Regarding the heavy oil fraction component of the modifier according to the invention, it is not necessary to use the compounds as they result from mentioned petroleum refining operation units. On many occasions it may be convenient to mix one or more components. Hence, and for illustrative but non-limiting purposes, an asphalt from the deasphalting process may be mixed with a bright stock extract to obtain a product adequate as a heavy oil fraction.

The fillers used in the modifier according to this invention may be of any of those used in mixtures for roads. One of the characteristics these fillers should have is that they are 100% sieved through UNE 0.08 mm sieve. In this sense, mentioned fillers are suitable, individually or mixed in any ratio. The percentage of the mineral filler as used in the modifier according to this invention is preferably comprised between 5 and 70%. It has been found that if the mineral filler has a high percentage of pores, the dispersion of the product in the bituminous mixture is faster.

The use of the filler has two advantages:
- It prevents an agglomeration of the pellets during storage; and
- A prior mastic is made between the filler and part of the binder.

As already mentioned, and apart from the three main components, the modifier according to this invention may include, if desired, adhesiveness improving additives such as those added to the bitumen of bituminous mixtures. As adhesiveness promoters, the following may be mentioned as examples: monoamines, diamines, triamines, amidoamines and imidazolines, branched or not, coming from fatty acids of at least 10 carbon atoms, alone or mixed in any ratio. As non-limiting examples, tallow diamine, in which the alkyl chain has 16 to 18 carbon atoms, resinic acid amidoamine and resinic acid imidazoline may be mentioned. In like manner, tall oil and rosin may be used. The percentage of these additives used in the modifier according to this invention is between 0 and 5% by weight.

According to a second aspect, the invention provides a process for the preparation of mentioned modifier, comprising the addition of the modifier components independently to the mixing equipment, or preparing first a dry blend with all or part of the final modifier components. This dry blend can be prepared in any of the equipment or systems normally used in the industry, such as blade or propeller mixers, drum mixers, etc.

To obtain the final modifier according to this invention, any of the mixing processes or systems normally used in the rubber industry may be used under suitable conditions.

These processes may be continuous or discontinuous.

As discontinuous processes are considered the open mill mixers, internal mixers, etc., where the mixing of the modifier ingredients is made. Afterwards, with the purpose of obtaining pellets, the blend obtained is discharged normally into a extruder equipped with the necessary system. In the mixing process, the addition of the modifier components may be done either independently or starting from a dry blend previously prepared containing all the ingredients in the desired concentration. The working temperature to be used to prepare the modifier may vary, depending on the composition, between 80 and 200°C. For the product granulation process, the temperature range to be used may vary between 80 and 150°C. Regarding mixing times, the basic criteria used in the production of rubber compounds would be applicable.

As continuous processes are considered extrusion processes which use single screw or multiple screw equipment; the most recommended being twin screw equipment due to their greater mixing capacity, resulting in a more homogeneous product. The addition of the components to the extruder may be effected according to the process described for discontinuous mixers. Moreover, the addition of one or several components may also be made at any point of the extruder which, in specific types of blends or relative concentrations of their components, may represent an improvement in the composition quality or a greater processing facility.

The length/diameter (L/D) ratio of the extruder may vary between 15 and 40 depending on it's being single or multiple screw, a greater length being recommended in single screw extruders to assure the optimum quality of the sample. In the case of single screw extruders, the compression ratio may be between 1:2 and 1:5. Multiple screw extruders will have one or more shearing zones, with a total length that may vary between 1 and 6 diameters depending on the composition and the other mixing conditions. The temperature to be used in the extruder may vary from 80 to 200°C.

For the pelletizing of modifier, the cooling process of the extrudate through a water bath, followed by drying and pelletizing in a cutter designed for soft material may be used or, and preferably, the underwater pelletizer type may be used, with which a more homogeneous pellet size distribution may be obtained.

The modifier obtained is then added to the bituminous mixture for roads during its production. This may be typically performed through the filler addition system or through any other suitable device installed in the plants. Both the temperature and mixing times are the conventional ones for the preparation of these mixtures.

In this way, and according to a third aspect, the invention provides a bituminous mixture for roads, modified with mentioned modifier, to provide greater cohesiveness to the bituminous mixture as well as to improve the rutting behaviour thereof.

The percentage of the modifier to be used in the bituminous mixture according to this invention is variable, although the typical amount added to the bituminous mixture is such that the polymer percentage referring to the total bitumen of the mixture is between 1 and 10%.

The mixture to pave roads, to which the modifier of this invention may be incorporated, may be any hot bituminous mixture; non-limiting examples are dense, semi-dense, open, draining or discontinuous mixtures.

No special machinery is necessary for the laying and compacting of these types of mixtures, and may be performed with any of the conventional types of machinery.

This invention is now illustrated by means of the following non-limiting examples.

### Example 1

A dry blend obtained in a blade mixer is added to a twin screw extruder. Said dry blend has the following composition:
- 35% thermoplastic elastomer of styrene-butadiene SBS with a radial structure having a molecular weight of 255,000 (weight average, Mw), and a styrene content of 30%;
- 35% Bright Stock extract; and
- 30% Portland cement, type CEM II.

The mixture is prepared at a temperature of 100°C and with a screw speed of 75 rpm. The extruded product is then cooled, dried, and cut to obtain pellets.

Then, and for comparative purposes, three draining mixtures are prepared in accordance with the specifications of the Spanish Department of Roads and Highways. One of these is modified with 8% of the modifier obtained before according to this invention; another with modified bitumen with 5% thermoplastic styrene and butadiene copolymer (SBS) equivalent to that of this example; and the third being added, at the moment of its preparation, with 2% commercial cellulose fibre recommended for these applications.

The particle size distribution of the aggregates used in all the above cases was the same and the final percentage of bitumen in the mixture was adjusted to 5%.

All the mixtures were subjected to the Cantabrian test (NLT 362). The mixture to which the modifier of this invention had been added showed losses of 5%; the mixture manufactured with modified bitumen showed losses of 18%, and the last, modified with fibres, losses of 20%.

The first two mixtures were subjected to a cyclic creep test with the following conditions:
- Test temperature: 40°C
- Pressure: 400 kPa
- t-rise: 0.2 s
- t-rest: 0.8 s
After 7200 load repetitions the deformation of the mixture containing the modifier of this invention was 1.5%, whereas the deformation of the mixture with modified bitumen was 2.0%.

### Example 2

A dry blend, having a composition as detailed below and obtained in a blade mixer, is added to a twin screw extruder:
- 35% thermoplastic elastomer of styrene-butadiene SBS with a radial structure having a molecular weight of 110,000 (average by weight, Mw) and a styrene content of 30%;
- 35% Bright Stock extract; and
- 30% Portland cement, type CEM II.

The mixture is prepared at a temperature of 90°C and at a screw speed of 125 rpm. The extruded product is cooled, dried, and cut to obtain pellets.

Afterwards, three discontinuous fine mixtures, type F10 are prepared in accordance with the specifications of the Spanish Department of Roads and Highways: one modified with 5% modifier obtained in this example; the second modified with bitumen that had been modified with 3% of an SBS equivalent to that of this example; and to the third having been added 1% of a commercial cellulose fibre, suitable for this use.

The particle size distribution of the aggregates used in all cases was the same, and the final percentage of bitumen used in the mixture was adjusted to 5.5%.

All three mixtures were submitted to the Spanish Wheel Tracking Test (NLT 173). The mixture to which the modifier of the invention had been added showed a deformation rate of 4 µm/min, the mixture prepared with the modified bitumen showed a deformation rate of 8 µm/min, and that prepared with the fibre showed a deformation rate of 12 µm/min.

## Claims

1. A modifier to improve the performance of bituminous mixtures used in road paving, whose modifier is easily dispersible at any ratio in the bituminous mixtures, and leads to the mixture's having improved properties as compared with traditional bituminous mixtures, characterised in that it comprises:
- 10 to 75% by weight of a polymer selected from the group consisting of natural rubber, ethylene-vinyl acetate copolymers, ethylene and propylene copolymers, synthetic rubbers of the type (A-B)ₙ or (A-B)ₙ - A wherein n is equal to or greater than 1, A corresponds to polystyrene chains and B corresponds to polybutadiene or polyisoprene chains, these rubbers having a linear or radial architecture, of a block, partial block or random block structure, hydrogenated or not, and mixtures of said polymers in any ratio;
- 10 to 75% by weight of a heavy oil fraction derived from petroleum refining operations and selected from the group consisting of bitumen coming from vacuum distilling units, or from deasphalting units, or from visbreaking units; medium neutral and heavy neutral coming from the lubricant vacuum unit; bright stock coming from the deasphalting unit; heavy and bright stock extracts coming from the furfural unit; and mixtures of said fractions in any ratio.
- 1 to 75% of a mineral filler selected from the group consisting of Portland cement of any grade, limestone, industrial calcium carbonate, basalt, quartzite, fly ash, talc, and mixtures of said fillers in any ratio;
- optionally, additives promoting adhesiveness.

2. A modifier according to claim 1, characterised in that the percentage of polymer or mixture of polymers is from 20 to 70%.

3. A modifier according to claim 1, characterised in that the percentage of mineral filler or mixture of mineral fillers is from 5 to 70%.

4. A modifier according to claim 1, characterised in that the adhesiveness promoters are selected from a group consisting of monoamines, diamines, triamines, amidoamaines or imidazolines, branched or not, resulting from fatty acids containing at least 10 carbon atoms, individually or mixed with each other in any ratio, tall oil and rosin.

5. A modifier according to claims 1 to 4, characterised in that the percentage of the adhesiveness promoter, or mixture of promoters, is from 0 to 5%.

6. A process for the preparation of a modifier according to claims 1 to 5, characterised in that it comprises mixing the polymer or polymers, the heavy oil fraction or fractions, the fillers and, optionally, the other additives, and pelletizing the resulting mixture.

7. A process according to claim 6, characterised in that the mixture is effected in open mill mixers, internal mixers or extruders, both of the simple and multiple screw types.

8. Use of the modifier according to claims 1 to 6, in bituminous mixtures for the road having, to give better cohesiveness to the bituminous mixture, as well as to improve the rutting behaviour thereof.

9. Use according to claim 8, characterised in that said modifier is incorporated in the bituminous mixture in such that the polymer percentage referring to the total bitumen of the mixture is an amount from 1 to 10%, being directly dispersible in the mixture using conventional processes.

10. Use according to claims 8 and 9, characterised in that said modifier is incorporated in hot type bituminous mixtures to pave roads.

11. An bituminous mixture to pave roads, characterised in that it includes a modifier as described in claims 1 to 5, or as obtained in claims 6 and 7.
